# EUROPÄISCHE PATENTSCHRIFT

(11) **EP 0 651 177 B1**
(45) Veröffentlichungstag und Bekanntmachung des Hinweises auf die Patenterteilung: **27.11.1996**
(21) Anmeldenummer: 94107297.7
(22) Anmeldetag: 10.05.1994
(51) Int. Cl.: F16F 15/126

(54) **Schwingungstilger**
Oscillation damper
Amortisseur d'oscillations

(30) Priorität: 20.10.1993 DE 4335766
(43) Veröffentlichungstag der Anmeldung: 03.05.1995
(73) Patentinhaber: Firma Carl Freudenberg, D-69469 Weinheim (DE)
(72) Erfinder: Böhm, Gerald, D-69469 Weinheim (DE); Olbrich, Andreas, D-64756 Mossautal (DE); Runge, Walter, D-69509 Mörlenbach (DE); Hamaekers, Arno, D-69517 Gorxheimertal-Unterflockenbach (DE)

(56) Entgegenhaltungen:
- EP-A- 0 356 917
- EP-A- 0 381 566
- EP-A- 0 500 329
- DE-B- 1 074 921
- GB-A- 1 077 102
- US-A- 2 878 689
- DATABASE WPI Section PQ, Week 9139, 13. November 1991 Derwent Publications Ltd., London, GB; Class Q63, AN 91-286410 & SU-A-1 620 725 (ZAPPORO KOMMUNAR CAR) 15. Januar 1991
- PATENT ABSTRACTS OF JAPAN vol. 18, no. 283 (M-1613) 30. Mai 1994 & JP-A-06 050 386 (N O K MEGURASUTEITSUKU) 22. Februar 1994

## Beschreibung

Die Erfindung betrifft einen Schwingungstilger zur Verwendung auf dem Außenumfang einer um eine Achse rotierenden und an den Enden Verdickungen aufweisenden Welle, umfassend ein in Umfangsrichtung verformbares Federelement aus Gummi mit mindestens zwei kreissegmentartig ausgebildeten Trägheitsmassen sowie einer Befestigungseinrichtung, die die Trägheitsmassen miteinander verbindet, wobei die Befestigungseinrichtung zumindest ein Gelenk umfaßt, das die Trägheitsmassen aufklappbar verbindet sowie ein Verschlußelement, durch das die Trägheitsmassen in ringförmig zusammengefügtem Zustand arretierbar sind.

Ein solcher Schwingungstilger ist aus der EP-A-0 356 917 bekannt. Die Trägheitsmassen sind vollständig vom Federelement umschlossen, wobei das Gelenk als Filmscharnier ausgebildet ist, aus Gummi besteht und einstückig mit dem Federelement ausgebildet ist.

Die Erfindung liegt die Aufgabe zugrunde, einen Schwingungstilger der eingangs genannten Art derart weiter zu entwickeln, daß sich eine leichtere Montierbarkeit ergibt, daß die Stabilität des Gelenks vergrößert wird und die Gefahr von Beschädigungen reduziert wird und daß die zueinander verschwenkbaren Hälften des Schwingungstilgers auch vor der Montage auf der Welle zuverlässig unverlierbar gehalten sind.

Diese Aufgabe wird erfindungsgemäß bei einem Schwingungstilger der eingangs genannten Art mit den Merkmalen von Anspruch 1 gelöst. Auf vorteilhafte Ausgestaltungen nehmen die Unteransprüche Bezug.

Bei dem erfindungsgemäßen Schwingungstilger ist es vorgesehen, daß zumindest zwei an den Außenumfang der Welle andrückbare Halbschalen vorgesehen sind, die jeweils durch das Federelement aus Gummi mit den mindestens zwei Trägheitsmassen verbunden sind und daß das Gelenk aus einem in Umfangsrichtung auskragenden Vorsprung der einen Trägheitsmasse besteht, der in eine entsprechend gestaltete Nut der anderen Trägheitsmasse derart eingreift, daß die beiden Trägheitsmassen im unmontierten Zustand unverlierbar miteinander verbunden sind. Die Lagerung und Montage des Schwingungstilgers ist dadurch wesentlich vereinfacht. Es können insbesondere Wellen mit dem Schwingungstilger versehen werden, die im Bereich ihrer stirnseitigen Enden Verdickungen eines Durchmessers aufweisen, der größer ist als der Innendurchmesser des Schwingungstilgers. Derartige Verdickungen können benötigt werden, um sekundäre Maschinenelemente anzuschließen.

Die Trägheitsmassen können in Querrichtung auf die mit dem Schwingungstilger auszustattende Welle aufschiebbar und auf dieser festlegbar sein.

Das Gelenk kann durch Scharniere gebildet sein. Unter einem Schamier ist in diesem Sinne ein Verbindungselement der Trägheitsmassen zu verstehen, das deren gelenkige Verbindung gestattet, nicht jedoch deren senkrechte Wegbewegung voneinander. Derartige Scharniere bestehen stets aus metallischem Werkstoffen. Sie benötigen zur Inbetriebnahme des Schwingungstilgers keine gesonderte Sicherung.

Das Verschlußelement kann aus einer Klammer bestehen, die in radialer Richtung nach außen vorstehende Ansätze der zu verbindenden Trägheitsmassen außenseitig umgreift. Ein solches Verschlußelement läßt sich besonders kostengünstig erzeugen und montieren.

Die Klammer und die Ansätze können ineinander eingreifende Hinterscheidungen haben, um eine unverlierbare Festlegung der Klammer an den Ansätzen zu gewährleisten.

Nach einer anderen Ausgestaltung ist es vorgesehen, daß sich die Hinterschneidungen im wesentlichen parallel zu der Achse des Schwingungstilgers erstrecken, die axial zumindest in einer Richtung offen sind. Das Einfügen der Klammer erfolgt in diesem Falle parallel zur Achse des Schwingungstilgers aus der Richtung des offenen Endes, was beispielsweise mit Hilfe eines Hammers erfolgen kann. Die während der bestimmungsgemäßen Verwendung im wesentlichen nur in radialer Richtung wirksamen Fliehkräfte vermögen eine solche Klammer nicht zu lösen.

Die Klammer kann elastisch auffederbar sein, um Herstellungstoleranzen der Trägheitsmassen auszugleichen und im langfristigen Gebrauch deren unverrückbare Anpressung aneinander zu gewährleisten. Die Federkraft muß die während der bestimmungsgemäßen Verwendung auftretenden Fliehkräfte um zumindest das Doppelte übertreffen.

Die Klammer kann oberflächenbündig in den Außenumfang der Trägheitsmassen eingesenkt sein. Hierdurch werden Unwuchterscheinungen reduziert, Unfallgefahren gesenkt und der zur Verfügung stehende Bauraum besser ausgenutzt.

Die einander benachbarten Federelemente können durch zumindest eine im Bereich des Gelenks angeordnete Federzunge verbunden sein, wobei die Trägheitsmassen durch die Federzunge aneinander anpreßbar sind. Der Schwingungstilger weist hierdurch in unmontiertem Zustand eine ringförmig in sich geschlossene Gestalt auf, was die Lagerung und den Transport wesentlich vereinfacht. Zu seiner Montage werden die Trägheitsmassen unter elastischer Dehnung der Federzunge soweit aufgeklappt, daß ein Aufschieben auf die auszustattende Welle in Querrichtung möglich ist. Anschließend werden die dazu erforderlichen Kräfte weggenommenen mit der Folge, daß die Trägheitsmassen versuchen, in ihre ursprüngliche, gegenseitige Zuordnungsposition zurückzukehren, was eine Anpreßung der Halteelemente an die Welle bewirkt. Die nachfolgende Anbringung des Verschlußelements ist dadurch stark vereinfacht. Die Federzunge und die Federelemente können einstückig ineinander übergehend ausgebildet und gemeinsam erzeugt sein.

Eine beispielhafte Ausführung des erfindungsgemäßen Schwingungstilgers ist in der Zeichnung dargestellt. Sie wird nachfolgend näher erläutert. Es zeigen:
- Fig. 1: Eine Ausführung des Schwingungstilgers in quergeschnittener Darstellung.
- Fig. 2: Den Schwingungstilger gemäß Fig. 1 in einer teilweise längsgeschnittenen Darstellung.
- Fig. 3: Die Anbringung des Schwingungstilgers nach den Fig. 1 und 2 anhand eines Beispiels.
- Fig. 4: Eine weitere Bauform des erfindungsgemäßen Schwingungstilgers in quergeschnittener Darstellung.

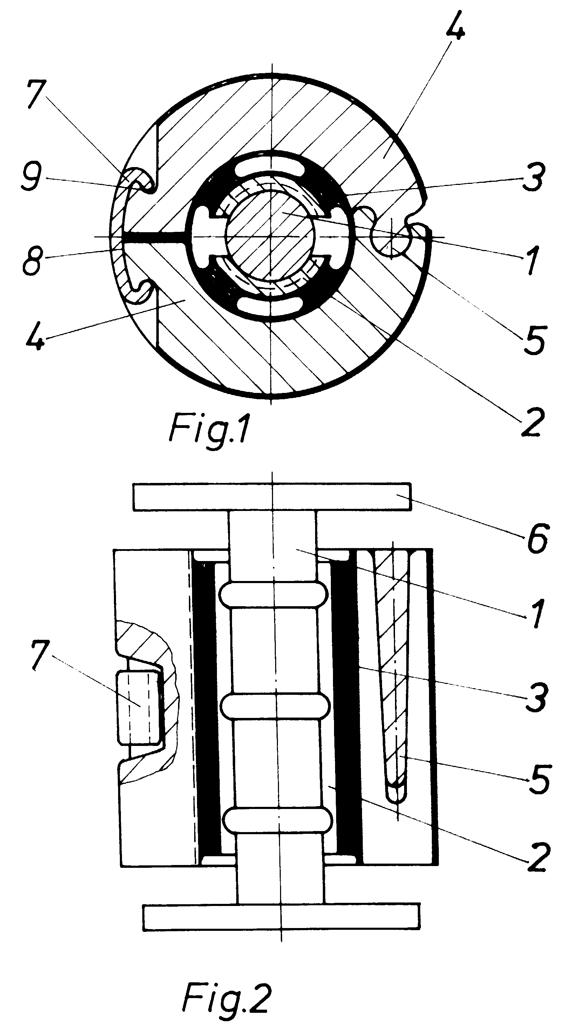

Der in Fig. 1 gezeigte Schwingungstilger ist zur Verwendung auf dem Außenumfang einer um eine Achse rotierenden Welle 1 bestimmt. Diese ist im Bereich ihrer stirnseitigen Enden mit unlösbaren Verdickungen 6 (Fig. 2) versehen, die verhindern, daß der Schwingungstilger in axialer Richtung auf die Welle 1 aufgeschoben werden kann. Um dennoch eine Montage zu ermöglichen ist es gemäß der Erfindung vorgesehen, daß der Schwingungstilger zwei an den Außenumfang der Welle andrückbare Halbschalen 2 umfaßt, die durch in Umfangsrichtung verformbare Federelemente 3 aus Gummi mit zwei kreissegmentartig ausgebildeten Trägheitsmassen 4 verbunden sind, wobei die Trägheitsmassen 4 durch Haltelemente aneinander festgelegt sind. Die Haltelemente sind so gestaltet und dimensioniert, daß sich eine in Umfangsrichtung unverrückbare Anpressung der Halbschalen 2 an den Außenumfang der Welle 2 ergibt. Die beiden Trägheitsmassen 4 sind auf der einen Seite durch ein Gelenk 5 ineinander einhakbar und relativ verschwenkbar verbunden und auf der dem Gelenk 5 gegenüberliegenden Seite durch ein Verschlußelement 7 zusammengefaßt und aneinander festgelegt. Das Verschlußelement 7 besteht aus einer Klammer, die die beiden Ansätze 8 der Trägheitsmassen 4 umgreift und in Hinterschneidungen 9 der Ansätze festgelegt ist. Die Klammer 7 ist federelastisch ausgebildet und hat eine Haltekraft, die die sich während der bestimmungsgemäßen Verwendung ergebenden Fliehkräfte um zumindest das Doppelte übertrifft. Hierdurch ist gewährleistet, daß die beiden Trägheitsmassen 4 auch unter extremen Betriebsbedingungen einander stets in starrer Weise zugeordnet sind. Das Gelenk 5 bildet einen einstückigen Bestandteil der beiden Trägheitsmassen 4. Es besteht aus einem in Umfangsrichtung auskragenden Vorsprung der einen Trägheitsmasse 4, der in eine entsprechend gestaltete Nut der anderen Trägheitsmasse 4 eingreift. Der Vorsprung und die Nut haben zusätzlich ein sich axial in einer Richtung verjüngendes Profil. Sie können hierdurch nur in axialer Richtung ineinander eingefügt werden, wobei ein Auseinanderfallen während der bestimmungsgemäßen Verwendung dadurch verhindert wird, daß die Klammer 7 in einer sich in Umfangsrichtung erstreckenden, in beide Trägheitsmassen 4 eingreifenden Nut angeordnet ist, welche zugleich die Eintiefungen 9 beinhaltet. Die sich in Umfangsrichtung erstreckende Klammer 7 ist hierdurch in bezug auf beide Trägheitsmassen 4 unverrückbar festgelegt und verhindert durch diese Art ihrer Anbringung und Einbettung zugleich eine axiale Relativbewegung der beiden Trägheitsmassen 4.

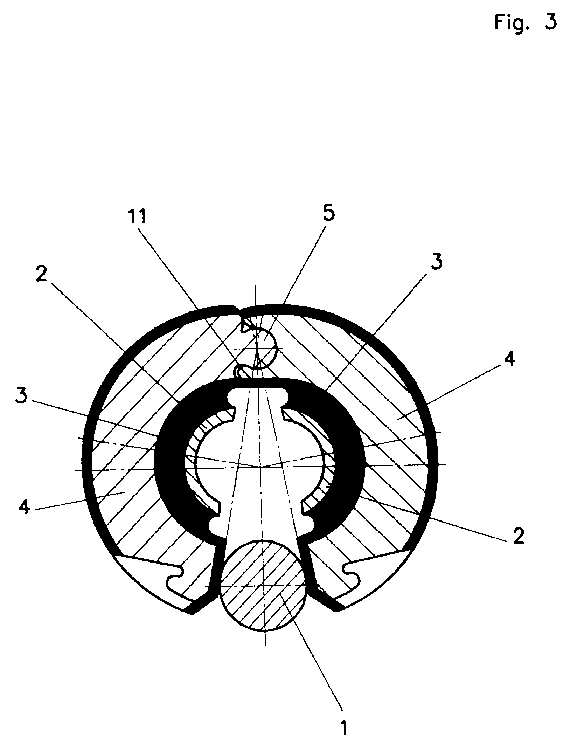

In Fig. 3 wird gezeigt, wie der Schwingungstilger nach den Fig. 1 und 2 an der damit auszustattenden Welle 1 festgelegt wird. Die ineinander eingehakten Trägheitsmassen werden dazu in Umfangsrichtung aufgeklappt und in Querrichtung auf die Welle 1 aufgeschoben. Die beiden Federelemente 3 sind durch eine im Bereich des Gelenks 5 angeordnete Federzunge 11 aus Gummi verbunden, wodurch der Schwingungstilger in unmontiertem Zustand stets eine ringförmige Gestalt hat. Beim Aufklappen der beiden Trägheitsmassen 4 ergibt sich eine vorübergehende elastische Dehnung der Federzunge 11. Der Schwingungstilger kann hierdurch in Querrichtung auf die Welle aufgeschoben werden. Wird anschließend die zum Aufklappen der beiden Trägheitsmassen 4 benötigte Kraft beseitigt, dann bewirkt die Federzunge 11, daß der Schwingungstilger seine ursprüngliche, ringförmig in sich geschlossene Gestalt wieder annimmt. Dabei ergibt sich eine Anlageberührung zwischen dem Innenumfang des Schwingungstilgers und dem Außenumfang der Welle 1. Dabei ergibt sich eine Anlageberührung zwischen dem Innenumfang des Schwingungstilgers und dem Außenumfang der Welle 1. Anschließend wird die Feder 7 entsprechend Fig. 1 in radialer Richtung auf die Vorsprünge 8 aufgefügt und durch Einschnappenlassen in den Vertiefungen 9 arretiert. Die Funktion der Halbschalen 2 wird bei der Ausführung nach Fig. 3 direkt von den Federelementen 3 übernommen. Diese können bedarfsweise auch mit der Welle 1 verklebt sein.

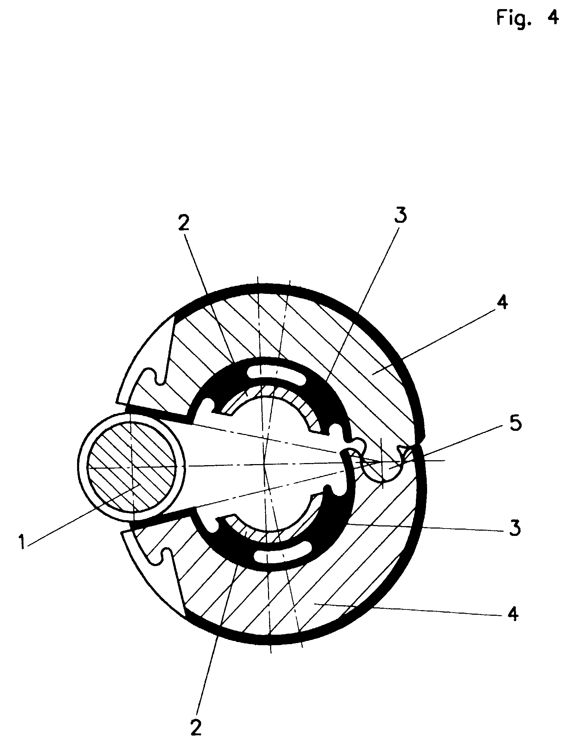

Die Figur 4 zeigt ein weiteres Ausführungsbeispiel des erfindungsgemäßen Schwingungstilgers.

Statt der beiden in den Zeichnungen gezeigten Trägheitsmassen kann auch eine größere Anzahl Trägheitsmassen zur Anwendung gelangen, die jeweils durch ein Gelenk miteinander verbunden sind. Auch in diesem Fall genügt ein einziges Verschlußelement, wenn eine unverrückbare Festlegung der Federelemente auf dem Außenumfang der Welle erzielt werden soll.

Die Ausbildung der Federelemente kann entsprechend dem Stand der Technik erfolgen. Zweckmäßigerweise sind die Federelemente aus Gummi erzeugt und durch unmittelbares Anvulkanisieren mit den Halbschalen und Trägheitsmassen verbunden.

## Patentansprüche

1. Schwingungstilger zur Verwendung auf dem Außenumfang einer um eine Achse rotierenden und an den Enden Verdickungen (6) aufweisenden Welle (1), umfassend ein in Umfangsrichtung verformbares Federelement (3) aus Gummi mit mindestens zwei kreissegmentartig ausgebildeten Trägheitsmassen (4) sowie einer Befestigungseinrichtung, die die Trägheitsmassen (4) miteinander verbindet, wobei die Befestigungseinrichtung zumindest ein Gelenk (5) umfaßt, das die Trägheitsmassen (4) aufklappbar verbindet sowie ein Verschlußelement (7), durch das die Trägheitsmassen (4) in ringförmig zusammengefügtem Zustand arretierbar sind, dadurch gekennzeichnet, daß zumindest zwei an den Außenumfang der Welle (1) andrückbare Halbschalen (2) vorgesehen sind, die jeweils durch das Federelement (3) aus Gummi mit den mindestens zwei Trägheitsmassen (4) verbunden sind und daß das Gelenk (5) aus einem in Umfangsrichtung auskragenden Vorsprung der einen Trägheitsmasse (4) besteht, der in eine entsprechend gestaltete Nut der anderen Trägheitsmasse (4) derart eingreift, daß die beiden Trägheitsmassen (4) im unmontierten Zustand unverlierbar miteinander verbunden sind.

2. Schwingungstilger nach Anspruch 1, gekennzeichnet dadurch, daß das Gelenk (5) durch ein Scharnier gebildet ist.

3. Schwingungstilger nach einem der Ansprüche 1 bis 2, gekennzeichnet dadurch, daß das Verschlußelement (7) aus einer Klammer besteht, die in radialer Richtung nach außen vorstehende Ansätze (8) der zu verbindenden Trägheitsmassen (4) außenseitig umgreift.

4. Schwingungstilger nach Anspruch 3, gekennzeichnet dadurch, daß die Klammer (7) und die Ansätze (8) ineinander eingreifende Hinterschneidungen (9) haben.

5. Schwingungstilger nach Anspruch 4, gekennzeichnet dadurch, daß sich die Hinterschneidungen (9) im wesentlichen parallel zu der Achse des Schwingungstilgers erstrecken.

6. Schwingungstilger nach Anspruch 3 gekennzeichnet dadurch, daß die Klammer (7) elastisch auffederbar ist.

7. Schwingungstilger nach einem der Ansprüche 3 bis 6, gekennzeichnet dadurch, daß die Klammer (7) oberflächenbündig in den Außenumfang der Trägheitsmassen (4) eingesenkt ist.

8. Schwingungstilger nach einem der Ansprüche 1 bis 7, dadurch gekennzeichnet, daß die Federelemente (3) durch zumindest eine im Bereich des Gelenks (5) angeordnete Federzunge (11) verbunden sind und daß die Trägheitsmassen (4) durch die Federzunge (11) aneinander anpreßbar sind.

9. Schwingungstilger nach Anspruch 8, dadurch gekennzeichnet, daß die Federzunge (11) und die Federelemente (3) einstückig ineinander übergehend ausgebildet sind.

## Claims

1. A vibration damper for use on the outside circumference of a shaft (1) which rotates about an axis and has thickenings (6) at the ends, comprising a rubber spring element (3) which can be deformed in the circumferential direction and has at least two inertia masses (4), configured in the manner of segments of a circle, and an attachment device which connects the inertia masses (4) to one another, the attachment device comprising at least one joint (5), which connects the inertia masses (4) in such a way that they can be pivoted apart, and comprising a closure element (7) by means of which the inertia masses (4) can be maintained in a state joined together in a ring-like manner, characterized in that at least two semi-shells (2) are provided, which can be pressed against the outside circumference of the shaft (1) and are connected in each case by the rubber spring element (3) with the at least two inertia masses (4), and in that the joint (5) is composed of a projection of the one inertia mass (4), which projection protrudes in the circumferential direction and engages in a correspondingly designed groove in the other inertia mass (4) in such a way that the two inertia masses (4) are captively connected to one another in the non-assembled state.

2. A vibration damper according to claim 1, characterized in that the joint (5) is formed by a hinge.

3. A vibration damper according to either of claims 1 and 2, characterized in that the closure element (7) is composed of a clip which engages in the radial direction around the outside of outwardly projecting shoulders (8) of the inertia masses (4) to be connected.

4. A vibration damper according to claim 3, characterized in that the clip (7) and the shoulders (8) have undercuts (9) which engage in one another.

5. A vibration damper according to claim 4, characterized in that the undercuts (9) extend substantially parallel to the axis of the vibration damper.

6. A vibration damper according to claim 3, characterized in that the clip (7) can be bent open in a flexible manner.

7. A vibration damper according to any one of claims 3 to 6, characterized in that the clip (7) is recessed into the outside circumference of the inertia masses (4) so as to be flush with the surface.

8. A vibration damper according to any one of claims 1 to 7, characterized in that the spring elements (3) are connected by means of at least one spring tongue (11) arranged in the region of the joint (5), and in that the inertia masses (4) can be pressed against one another by the spring tongue (11).

9. A vibration damper according to claim 8, characterized in that the spring tongue (11) and the spring elements (3) are designed to merge integrally into one another.

## Revendications

1. Amortisseur d'oscillations destiné à être utilisé sur la circonférence extérieure d'un arbre (1) tournant autour d'un axe et présentant aux extrémités des épaississements (6), comprenant un élément élastique (3) en caoutchouc déformable dans le sens circonférentiel avec au moins deux masses d'inertie (4) exécutées à la manière d'un segment de cercle et un dispositif de fixation qui relie les masses d'inertie (4) entre elles, le dispositif de fixation comprenant au moins une articulation (5) qui relie les masses d'inertie (4) de manière dépliable ainsi qu'un élément de fermeture (7) grâce auquel les masses d'inertie (4) peuvent être bloquées lorsqu'elles sont assemblées en forme de bague, caractérisé en ce qu'au moins deux demi-coques (2) aptes à être pressées contre la circonférence extérieure de l'arbre (1) sont prévues, qui sont reliées chacune, par l'intermédiaire de l'élément élastique (3) en caoutchouc, aux - au moins - deux masses d'inertie (4) et en ce que l'articulation (5) est constituée d'une saillie dépassant l'une (4) des masses d'inertie dans le sens circonférentiel, qui s'engrène dans une rainure de forme correspondante de l'autre masse d'inertie (4) de manière à obtenir une liaison imperdable entre les deux masses d'inertie (4) en état non monté.

2. Amortisseur d'oscillations selon la revendication 1, caractérisé en ce que l'articulation (5) est formée d'une charnière.

3. Amortisseur d'oscillations selon l'une des revendications 1 et 2, caractérisé en ce que l'élément de fermeture (7) se compose d'une agrafe qui enveloppe des épaulements (8) faisant saillie vers l'extérieur dans le sens radial des masses d'inertie (4) à relier.

4. Amortisseur d'oscillations selon la revendication 3, caractérisé en ce que l'agrafe (7) et les épaulements (8) ont des contre-dépouilles (9) s'engrenant les unes dans les autres.

5. Amortisseur d'oscillations selon la revendication 4, caractérisé en ce que les contre-dépouilles (9) s'étendent essentiellement parallèlement à l'axe de l'amortisseur d'oscillations.

6. Amortisseur d'oscillations selon la revendication 3, caractérisé en ce que l'agrafe (7) peut s'élargir élastiquement.

7. Amortisseur d'oscillations selon l'une quelconque des revendications 3 à 6, caractérisé en ce que l'agrafe (7) est enfoncée à fleur de surface dans la circonférence extérieure des masses d'inertie (4).

8. Amortisseur d'oscillations selon l'une quelconque des revendications 1 à 7, caractérisé en ce que les éléments élastiques (3) sont reliés par au moins une lame élastique (11) disposée au niveau de l'articulation (5) et en ce que les masses d'inertie (4) peuvent être pressées l'une contre l'autre grâce à la lame élastique (11).

9. Amortisseur d'oscillations selon la revendication 8, caractérisé en ce que la lame élastique (11) et les éléments élastiques (3) sont exécutés de manière à se fondre l'une dans l'autre.
